# DEMANDE DE BREVET EUROPEEN

(11) **EP 4 556 516 A1**
(43) Date de publication de la demande: **21.05.2025**
(21) Numéro de dépôt: 23210794.6
(22) Date de dépôt: 20.11.2023
(51) Int. Cl.: C08K 3/26, C08K 3/36, C08K 7/26, C08K 9/02, C08K 11/00, G04B 37/22

(54) **ARTICLE EN MATÉRIAU COMPOSITE MINÉRAL ET SON PROCÉDÉ DE FABRICATION**

(71) Demandeur: The Swatch Group Research and Development Ltd, 2074 Marin (CH)
(72) Inventeur: FRANÇOIS, Nicolas, 2000 Neuchâtel (CH); DOVCIK, Marek, 06250 Mougins (FR); NAPOLI, Sophie, 2000 Neuchâtel (CH); BOURBAN, Stewes, 1589 Chabrey (CH)
(74) Mandataire: ICB SA

(57) **Abrégé**

Un aspect de l'invention concerne un article réalisé dans un matériau composite comprenant en poids:
- une ou plusieurs résines thermoplastiques au moins partiellement biosourcées, le pourcentage total de la ou des résines thermoplastiques étant compris entre 20% et 74.9%,
- une charge minérale avec une matière minérale à base de coquillages et une matière minérale à base de silice poreuse provenant de squelettes de diatomées, le pourcentage de la charge minérale étant compris entre 25% et 79.9%,
- un dispersant dans un pourcentage en poids compris entre 0.1% et 5%, de préférence entre 0.1% et 1%,
- optionnellement un système de colorants avec un pourcentage compris entre 0% et 5%,
- optionnellement un renfort avec un pourcentage compris entre 0% et 8%,
- optionnellement un agent de couplage avec un pourcentage compris entre 0% et 5%.

Un autre aspect de l'invention concerne le procédé de fabrication de cet article.

## Description

### Domaine technique de l'invention

L'invention concerne un matériau composite comprenant au moins une résine biosourcée et une charge minérale.

### Arrière-plan technologique

On connaît de l'art antérieur des matériaux dit biocéramiques. Il s'agit du mélange d'une résine partiellement biosourcée, telle que du Polyamide 11 biosourcé à plus de 50%, et d'une céramique telle que la zircone stabilisée à l'oxyde d'yttrium (YSZ). Les avantages connus d'un tel composite sont :
- Sa colorabilité via des systèmes de colorants classiques,
- L'augmentation de la densité des composants moulés du fait de la densité inhérente à la zircone qui est de 4.5g/cm³,
- L'augmentation de la conductivité thermique des composants moulés du fait de la conductivité thermique inhérente à la zircone qui est de 2.5 W.m⁻¹.K-¹.

Les désavantages de ce matériau biocéramique sont l'utilisation d'une part importante de ressources fossiles dans la résine et dans la céramique et le développement potentiel de mauvaises odeurs du fait des bactéries qui se forment à la surface de la matière lors du porté, et qui se nourrissent des résidus organiques. En effet, les matière présentes dans le composite décrit n'ont aucune activité antibactérienne notable.

### Résumé de l'invention

L'invention consiste à développer un nouveau matériau composite minéral pour pallier les désavantages du matériau biocéramique de l'art antérieur. Ce nouveau matériau se doit d'avoir un impact écologique le plus faible possible et d'avoir un confort optimisé au contact avec la peau permettant une évacuation de la chaleur à l'interface peau-poignet et d'être anti-odeur.

Le matériau composite comporte une ou plusieurs résines thermoplastiques au moins partiellement biosourcées. On entend par partiellement que la résine ou les résines sont ensemble biosourcées avec un taux supérieur ou égal à 60%, de préférence supérieur ou égal à 85%, plus préférentiellement supérieur ou égal à 98%. Le matériau composite comporte également à la place de la céramique selon l'art antérieur, une matière minérale issue de coquillages, donc à base de carbonate de calcium (CaCOs), et une silice poreuse provenant du squelette de diatomées.

Le CaCOs a une conductivité thermique équivalente à celle de la zircone YSZ à 2.5 W.m⁻¹.K-¹. La densité du CaCOs est de 2.7 g.cm⁻³ contre 4.5 g.cm⁻³ pour la zircone ce qui permet d'avoir un composite plus léger au porter. La silice de diatomée a des propriétés antibactériennes permettant d'éviter le développement de mauvaises odeurs. En outre, mélangée avec le coquillage, elle permet lors du procédé de fabrication un meilleur écoulement de la poudre dans le doseur.

Plus précisément, l'invention se rapporte à un article réalisé dans un matériau composite comprenant en poids:
- une ou plusieurs résines thermoplastiques au moins partiellement biosourcées, le pourcentage total de la ou des résines thermoplastiques étant compris entre 20% et 74.9%,
- une charge minérale avec une matière minérale à base de coquillages et une matière minérale à base de silice poreuse provenant de squelettes de diatomées, le pourcentage de la charge minérale étant compris entre 25% et 79.9%,
- un dispersant dans un pourcentage compris entre 0.1% et 5%, de préférence entre 0.1% et 1%,
- optionnellement un système de colorants avec un pourcentage compris entre 0% et 5%,
- optionnellement un renfort avec un pourcentage compris entre 0% et 8%,
- optionnellement un agent de couplage avec un pourcentage compris entre 0% et 5%.

Elle se rapporte également au procédé de fabrication de l'article qui comporte les étapes suivantes :
a. Mise à disposition de la matière minérale à base de coquillages et de la matière minérale à base de silice poreuse provenant de squelettes de diatomées,
b. Mise à disposition de la ou des résines thermoplastiques au moins partiellement biosourcées,
c. Collecte, tri, nettoyage, broyage et tamisage des coquillages pour garder uniquement des particules de coquillages ayant une granulométrie inférieure ou égale à 100 µm,
d. Mélange des particules de coquillages et de la silice poreuse, le mélange formant la charge minérale,
e. Mélange de la charge minérale et de la ou des résines thermoplastiques avec le dispersant,
f. Ajout éventuel audit mélange de l'étape e. du système de colorants, du renfort et/ou de l'agent de couplage,
g. Façonnage du mélange de l'étape e. ou de l'étape f. pour obtenir l'article.

### Description détaillée de l'invention

L'invention concerne un article réalisé dans un matériau composite comportant au moins une résine thermoplastique majoritairement biosourcée et une matière minérale à base de carbonate de calcium et de silice poreuse. L'article peut, à titre d'exemple, être un composant horloger. Il peut plus spécifiquement s'agir d'un composant d'habillage choisi parmi la liste non exhaustive comprenant une carrure, un fond, une lunette, une couronne, un poussoir, un maillon de bracelet, un bracelet, une boucle ardillon, un fermoir, un cadran, une aiguille et un index de cadran.

Le matériau composite comprend (ou est constitué de) par rapport au poids total du composite :
- une ou plusieurs résines thermoplastiques dans un pourcentage total en poids compris entre 20% et 74.9%, de préférence entre 50% et 59.9%. Le mélange de résines ou la résine si il y a une seule résine, est biosourcé avec un taux supérieur ou égal à 60%, de préférence supérieur ou égal à 85%, plus préférentiellement supérieur ou égal à 98%; le pourcentage biosourcé du mélange ou de la résine étant mesuré selon la norme ASTM D6866-22. La ou les résines thermoplastiques sont choisies parmi le polyamide 11 (PA11), le polyamide 10 (PA10), le polyamide 610 (PA610), le polyéthylène furanoate (PEF), le polyuréthane (PU), le polyéther à blocs amides (PEBA) le thermoplastique élastomère copolyester (TPC), le thermoplastique élastomère polyurethane (TPU), le thermoplastique élastomère polyoléfine (TPO), le thermoplastique élastomère vulcanisé (TPV) et le thermoplastique élastomère styrénique (TPES). Le matériau composite peut être souple ou rigide. Dans le cas d'un composite rigide, le mélange peut comporter une résine thermoplastique choisie parmi le polyamide 11 (PA11), le polyamide 10 (PA10), le polyamide 610 (PA610) et du polyéthylène furanoate (PEF) et une résine élastomère thermoplastique de type polyuréthane (PU) ou polyéther à blocs amides (PEBA) afin d'absorber les chocs. La résine élastomère thermoplastique est alors comprise dans un pourcentage en poids par rapport au poids total du mélange de résines entre 1 et 10%. Le composite rigide pourrait comprendre plusieurs grades d'un même type de résine thermoélastique et d'un même type de résine élastomère thermoplastique, par exemple plusieurs résines PA11 ayant des rhéologies différentes. Préférentiellement, les résines PA11, PA10 et PEF sont à 98% biosourcées, la résine PA610 à 62% biosourcée et la résine élastomère thermoplastique est biosourcée à plus de 40%, plus préférentiellement à 98%. Dans le cas d'un composite souple, seules des résines élastomères thermoplastiques souples sont utilisées. Il peut alors s'agir d'un composite comportant une résine choisie parmi le PEBA (polyéther à blocs amides), TPC (thermoplastiques élastomères copolyesters), TPU (thermoplastiques élastomères polyurethane), TPO (thermoplastiques élastomères polyoléfines), TPV (thermoplastiques élastomères vulcanisés) et le TPES (thermoplastiques élastomères styréniques). Comme précédemment, il peut s'agir d'une résine incluant plusieurs grades pour ce type de résine, avec ainsi des rhéologies différentes. De préférence, il s'agit d'une résine ou d'un mélange d'un même type de résine choisi parmi le TPU, le TPC et le PEBA,
- une charge minérale comprenant une matière minérale à base de carbonate de calcium (CaCOs) et une matière minérale à base de silice poreuse dans un pourcentage total en poids compris entre 25% et 79.9%, de préférence entre 40% et 49.9%. La matière minérale à base de CaCOs provient de coquillages et plus précisément des déchets de la production de coquillages. Préférentiellement, il s'agit de coquilles Saint-Jacques et/ou de coquilles d'huitres pour leur couleur naturelle plus claire. Elles sont présentes avec une granulométrie inférieure ou égale à 100 µm, de préférence inférieure ou égale à 20 µm, la granulométrie étant mesurée selon une méthode de diffractométrie laser (ISO 13320-1 (2009)). La silice poreuse provient de squelettes de diatomées. Il s'agit de microalgues qui sont des organismes unicellulaires à squelette de silice. La silice poreuse des squelettes de diatomées provient de cultures et est donc renouvelable. La silice poreuse est présente dans un pourcentage en poids compris entre 2% et 20% par rapport au poids total de la charge minérale. La silice microporeuse peut être dopée par des ions argent ou un autre additif antibactérien tel que des microparticules d'or, des microparticules d'oxydes de cuivre afin de décupler son effet antibactérien.
- un dispersant dans un pourcentage en poids compris entre 0.1 et 5%, de préférence entre 0.1 et 1%. Il peut s'agir d'une cire naturelle, de paraffines, de tensioactifs, etc.
- à titre optionnel, un système de colorants dans un pourcentage en poids compris entre 0% et 5%. Par exemple, le système de colorants peut être formé d'une ou plusieurs résines biosourcées concentrées en matières colorantes naturelles, telles qu'une résine PA11 ou une résine PA10. Eventuellement, le système de colorants peut contenir une matière minérale issue de coquillages avec une fraction ou la combinaison de différentes fractions granulométriques, prélevée par tamisage ; la taille moyenne de ces différentes fractions étant plus élevée et comprise entre 100 et 500 µm. Cela permet de visualiser les grains de coquillage quand un effet esthétique particulier est recherché. Il peut s'agir des coquilles Saint-Jacques et d'huître susmentionnées pour la charge minérale ou d'autres types de coquillages comme la moule, les particules plus grosses étant alors sélectionnées. Le pourcentage de cette matière minérale dans le système de colorants peut être compris entre 1% et 10%, soit entre 0% et 0.3% par rapport au poids total pour la limite supérieure à 10%.
- à titre optionnel, un renfort dans un pourcentage en poids compris entre 0% et 8%. Le renfort peut être présent sous différentes formes, par exemple, sous forme de fibres ou de particules. A titre d'exemple, il peut s'agir de fibres métalliques, minérales ou organiques d'origine végétale ou non. On pourra par exemple privilégier les fibres d'alginate de calcium provenant d'algues marines. En alternative, il peut s'agir de fibres de carbone, de fibres de verre, de billes de verre, etc.
- à titre optionnel, un agent de couplage afin d'optimiser l'interface entre la charge minérale, les éventuels renforts et le mélange de résines. Cet agent de couplage peut être présent dans un pourcentage en poids compris entre 0% et 5%. Il s'agit par exemple d'un copolymère d'éthylène et d'acide acrylique. Il peut également s'agir de copolymère d'ethylène vynyl acétate et d'acide acrylique.

L'invention se rapporte également au procédé de fabrication de l'article décrit ci-avant. Il comporte les étapes suivantes :
- Mise à disposition des coquillages et de la silice poreuse provenant de squelettes de diatomées,
- Mise à disposition de la ou des résines thermoplastiques biosourcées. De préférence, la ou les résines thermoplastiques ont un indice de fluidité en volume inférieur à 30 cm³/10 min.
- Collecte, tri, nettoyage, broyage et tamisage des coquillages pour garder des particules ayant un granulométrie inférieure ou égale à 100 µm, de préférence inférieure ou égale à 20 µm,
- Mélange des particules de coquillages et de la silice poreuse, le mélange formant la charge minérale,
- Mélange de la charge minérale et de la ou des résines thermoélastiques avec le dispersant,
- Ajout éventuel du système de colorants, du renfort et/ou de l'agent de couplage au mélange issu de la charge minérale, de la ou des résines thermoélastiques et du dispersant,
- Façonnage du mélange issu de la charge minérale, de la ou des résines thermoplastiques et du dispersant avec les ajouts éventuels pour obtenir l'article.

Le façonnage peut être réalisé par moulage par injection après une étape préalable de compoundage par extrusion bi-vis et granulation. En alternative, le procédé de fabrication pourrait être réalisé par extrusion.

Avant le broyage, les coquillages sont manuellement ou automatiquement triés selon la couleur. Ils peuvent être nettoyés par le biais d'un lavage physico-chimique avec une action mécanique de type brossage dans une solution basique type eau de javel afin de retirer les organiques.

De préférence, différentes granulométries de particules de coquillage sont mélangées pour avoir une répartition granulométrique plus large ou une répartition granulométrique polymodale afin d'améliorer la compacité des charges et de pouvoir charger le système de résines avec des taux supérieurs ou égaux à 40% en poids. Il est par exemple possible de combiner 100% de la fraction tamisée à 10 µm, avec 50% de la fraction tamisée à 20 µm et 10% de la fraction tamisée à 100 µm. Eventuellement, les fractions avec une granulométrie supérieure sont récupérées afin d'être utilisées dans le système de colorants pour donner l'aspect esthétique particulier.

## Revendications

1. Article réalisé dans un matériau composite comprenant en poids:
- une ou plusieurs résines thermoplastiques au moins partiellement biosourcées, le pourcentage total de la ou des résines thermoplastiques étant compris entre 20% et 74.9%,
- une charge minérale avec une matière minérale à base de coquillages et une matière minérale à base de silice poreuse provenant de squelettes de diatomées, le pourcentage de la charge minérale étant compris entre 25% et 79.9%,
- un dispersant dans un pourcentage en poids compris entre 0.1% et 5%, de préférence entre 0.1% et 1%,
- optionnellement un système de colorants avec un pourcentage compris entre 0% et 5%,
- optionnellement un renfort avec un pourcentage compris entre 0% et 8%,
- optionnellement un agent de couplage avec un pourcentage compris entre 0% et 5%.

2. Article selon la revendication précédente, **caractérisé en ce que** la ou les résines thermoplastiques sont dans leur totalité biosourcées à un taux supérieur ou égal à 60%, de préférence supérieur ou égal à 85%, plus préférentiellement supérieur ou égal à 98%, le taux étant mesuré selon la norme ASTM D6866-22.

3. Article selon l'une des revendications précédentes, **caractérisé en ce que** la ou les résines thermoplastiques sont choisies parmi le polyamide 11, le polyamide 10, le polyamide 610, le polyéthylène furanoate, le polyuréthane, le polyéther à blocs amides, le thermoplastique élastomère copolyester, le thermoplastique élastomère polyuréthane, le thermoplastique élastomère polyoléfine, le thermoplastique élastomère vulcanisé et le thermoplastique élastomère styrénique.

4. Article selon la revendication précédente, **caractérisé en ce que**, pour un matériau composite rigide, il comporte une résine thermoplastique choisie parmi une première liste constituée du polyamide 11, du polyamide 10, du polyamide 610 et du polyéthylène furanoate et une résine élastomère thermoplastique choisie parmi une seconde liste constituée du polyuréthane et du polyéther à blocs amides, ou il comporte plusieurs résines d'un même type choisies parmi lesdites première et seconde listes.

5. Article selon la revendication 3, **caractérisé en ce que**, pour un matériau composite souple, il comporte une résine élastomère thermoplastique choisie parmi la liste constituée du polyéther à blocs amides, du thermoplastique élastomère copolyester, du thermoplastique élastomère polyuréthane, du thermoplastique élastomère polyoléfine, du thermoplastique élastomère vulcanisé et du thermoplastique élastomère styrénique, ou il comporte plusieurs résines d'un même type choisies au sein de ladite liste.

6. Article selon l'une des revendications précédentes, **caractérisé en ce que** le pourcentage en poids de la charge minérale est compris entre 40% et 49.9% et **en ce que** le pourcentage total en poids de la ou les résines thermoplastiques est compris entre 50% et 59.9%.

7. Article selon l'une des revendications précédentes, **caractérisé en ce que** la silice poreuse est présente dans un pourcentage en poids compris entre 2% et 20% par rapport au poids de la charge minérale.

8. Article selon l'une des revendications précédentes, **caractérisé en ce que** la silice poreuse est dopée par un ou plusieurs additifs antibactériens.

9. Article selon la revendication précédente, **caractérisé en ce que** le ou les additifs antibactériens sont choisis parmi des ions d'argent, des microparticules d'or et des microparticules d'oxyde de cuivre.

10. Article selon l'une des revendications précédentes, **caractérisé en ce que** la matière minérale à base de coquillages a une granulométrie inférieure ou égale à 100 µm, de préférence inférieure ou égale à 20 µm.

11. Article selon l'une des revendications précédentes, **caractérisé en ce que** le système de colorants comporte également une matière minérale à base de coquillages, ladite matière minérale ayant une granulométrie comprise entre 100 µm et 500 µm.

12. Article selon la revendication précédente, **caractérisé en ce que** le pourcentage en poids de la matière minérale par rapport au système de colorants est compris entre 1% et 10%.

13. Procédé de fabrication de l'article selon l'une des revendications précédentes, comprenant les étapes de :
a. Mise à disposition de la matière minérale à base de coquillages et de la matière minérale à base de silice poreuse provenant de squelettes de diatomées,
b. Mise à disposition de la ou des résines thermoélastiques au moins partiellement biosourcées,
c. Collecte, tri, nettoyage, broyage et tamisage des coquillages pour garder uniquement des particules de coquillages ayant une granulométrie inférieure ou égale à 100 µm,
d. Mélange des particules de coquillages et de la silice poreuse, le mélange formant la charge minérale,
e. Mélange de la charge minérale et de la ou des résines thermoélastiques avec le dispersant,
f. Ajout éventuel audit mélange de l'étape e. du système de colorants, du renfort et/ou de l'agent de couplage,
g. Façonnage du mélange de l'étape e. ou de l'étape f. pour obtenir l'article.

14. Procédé selon la revendication précédente, **caractérisé en ce que** la ou les résines thermoplastiques ont un indice de fluidité en volume inférieur à 30 cm³/10 min.

15. Procédé selon la revendication 13 ou 14, **caractérisé en ce que** différentes granulométries des particules de coquillage sont mélangées à l'étape d. afin d'améliorer la compacité de la charge minérale.

16. Procédé selon l'une des revendications 13 à 15, **caractérisé en ce que** le nettoyage avant le broyage est réalisé avec une action mécanique dans une solution basique.

17. Procédé selon l'une des revendications 13 à 16, **caractérisé en ce que** l'étape g. de façonnage est réalisée par moulage par injection ou par extrusion.
